# EUROPEAN PATENT SPECIFICATION

(11) **EP 3 885 713 B1**
(45) Date of publication and mention of the grant of the patent: **13.03.2024**
(21) Application number: 21164087.5
(22) Date of filing: 22.03.2021
(51) Int. Cl.: G01F 3/08

(54) **ROTARY PISTON WATER METER**
ROTATIONSKOLBENWASSERZÄHLER
COMPTEUR D'EAU À PISTON ROTATIF

(30) Priority: 24.03.2020 US 202016828438
(43) Date of publication of application: 29.09.2021
(73) Proprietor: Honeywell International Inc., Charlotte, NC 28202 (US)
(72) Inventor: SMITH, Adrian, Charlotte, NC 28202 (US)
(74) Representative: Houghton, Mark Phillip

(56) References cited:
- WO-A1-93/22631
- FR-A1- 2 719 663
- FR-A1- 2 834 786
- FR-A1- 2 841 646
- FR-B1- 2 834 786
- FR-B1- 2 841 646
- JP-B2- 5 971 989
- US-A- 2 449 974
- US-A- 3 430 537
- US-B1- 6 619 116

## Description

### Background

The present disclosure pertains to fluid meters, particularly to efficiencies of such meters.

US2449974A discloses magnetic means whereby mechanical frictional resistance to movement of a fluid actuated member of a meter or the like is reduced to the extent that interference with accurate operation is practically eliminated. FR 2 834 786 A1 discloses a fluid meter comprising a rotary piston wherein the density of the piston is set in order to maintain the piston floating due to buoyancy in the fluid to be measured for reducing friction between the rotary piston and the surrounding casing.

### Summary

The present invention in its various aspects is as set out in the appended claims. The disclosure reveals a positive displacement fluid flow meter that may have a rotary piston that rotates inside a chamber as a fluid flows through it. The rotating piston may create fixed volume discrete parcels from the passing fluid. The piston may be buoyant relative to the fluid flowing through the meter. Buoyancy of the piston may reduce friction and noise in the meter to result in a more accurate fluid flow measuring meter.

### Brief Description of the Drawing

Figures 1A, 1B, 1C and 1D are diagrams of a piston designed to run within a chamber;
Figures 2A, 2B, 2C and 2D are diagrams including an exploded view of a measuring chamber with an inlet and outlet ports and a piston;
Figures 3A and 3B are diagrams that illustrate measurement error in percentage versus flow rate;
Figure 4 is a diagram of the meter showing a chamber, a top plate, a piston having a buoyant material relative to a measured fluid, and inlet and outlet ports;
Figure 5 is a diagram of piston material where gravity has a downward force upon the piston material that may be countered by an upward thrust force; and
Figure 6 is a diagram of a graph showing increased performance due to increased buoyancy of a rotary piston of a positive displacement meter.

### Description

The present system and approach may incorporate one or more processors, mechanical devices, computers, controllers, user interfaces, wireless and/or wire connections, other hardware and software, and/or the like, in an implementation described and/or shown herein. Various implementations not necessarily explicitly mentioned herein may be implemented with the present system and approach.

This description may provide one or more illustrative and specific examples or ways of implementing the present system and approach. There may be numerous other examples or ways of implementing the system and approach.

A rotary piston water meter may use a rotating piston in a chamber which creates fixed-volume discrete parcels from the passing fluid. The meter may be required to work over a range of flows measured in liters per hour. Measuring low flow may be problematic due to the small amount of energy from flowing fluid to drive the piston. Friction between the piston and its chamber base may limit performance.

Water meter performance may be defined by an "R" value (Turn down Ratio) that is a nominal flow rate divided by minimum flow rate within a tolerance band. It may be difficult to produce meters to high "R" values in volume manufacturing in the related art.

For illustrative purposes, one may have two examples of key volumetric meters designated as DN15 (15mm) and DN20 (20mm). Other examples may be used. The DN15 may use a piston that revolves 36 times for one liter of water. It appears good at low flows due to its small piston requiring less energy to move it. Its high flow performance may be limited due to its small size. The DN20 may use a piston that revolves 16.5 times for one liter of water. It appears less capable at low flows compared to the DN15 but seems better at high flows. There may be meter limits. The meters may have a maximum performance of R400 (DN15) and R315 (DN20). Manufacturing to these standards on a day to day basis might be challenging.

One main product range may be DN15 and DN20 both using different revolutions per liter chamber assemblies. One may have other product lines with different revs/liter. Competitors may use different revs/liter and chamber sizes. There may be other possible products besides the DN15 and DN20. The present products may be centered around the main product range though, but there may be other sizes.

Noise generated from the rotating piston may limit the markets into which such water meters can be sold. At elevated water temperatures, the piston may seize due to the small clearances required to achieve accuracy. The present approach may be to create a buoyant piston (density less than 1.0g/cm3) which gives the following benefits, such as reducing friction at low flows and having an R value of 1000 plus prior to a 100 hour endurance. One may change the R value to greater than 1000 prior to approval testing. Then approval values of R800 may be achievable. There may be higher manufacturing yields. One may scope to relax manufacturing tolerances. There is a possibility of a single product to have the current range of R values to cover low flow and high flow accuracies. There may be noise reduction due to increased clearances and less dense material. There may be an increase in thermal capabilities due to increased clearances. The present approach should give high R numbers with "standard" manufacturing and clearances.

The present approach to create a buoyant piston (having a density less than 1.0g/cm3) should give the following benefits (noted above) to reduce friction at low flows, provide a higher R value as a standard, result in higher manufacturing yields, scope to relax manufacturing tolerances, provide a possibility of a single product to cover the current range, and improve noise reduction and thermal capabilities due to increased clearances.

The present technique may provide a business advantage and/or technical differentiation with higher accuracy as a standard; and if there has been a fall behind in a specification, the technique may allow one to not only catch up but to meet current industry specifications.

Fundamentally, a material change in a product should result in large gains in performance and yield. Further work to capitalize on the large gains of a buoyant piston with new tools or tooling changes may aid in noise reduction, manufacturing, and increase thermal tolerance thereby improving market sales. These factors may relate to water metering volumetric products.

The related art might offer water metering volumetric products with higher specifications than the present product, which can be difficult to produce. A buoyant piston makes it easier to produce volumetric meter products with higher specifications than the related art products. The present approach makes it easy to produce metering volumetric products with higher specifications than the related art products. A buoyant piston may make it easier to produce volumetric meter products with more rigid specifications than the current products.

The present piston and chamber may form a measuring unit and part of a meter assembly. The meter itself typically captures data in a mechanical way using number wheels to display water usage. Some meters may have electronic displays and communication techniques. The meters may be fitted with electronic/software communications to provide remote details such as fluid usage.

A present positive displacement rotary piston water meter may or may not use a buoyant piston. A product line may include volumetric meters (e.g., positive displacement meters). Positive displacement flowmeters may measure volumes of fluid flowing through them by counting repeatedly the filling and discharging of known fixed volumes. A positive displacement flowmeter may incorporate a chamber that obstructs the flow. Inside the chamber, a rotating or reciprocating piston may be placed to create fixed-volume discrete parcels from the passing fluid.

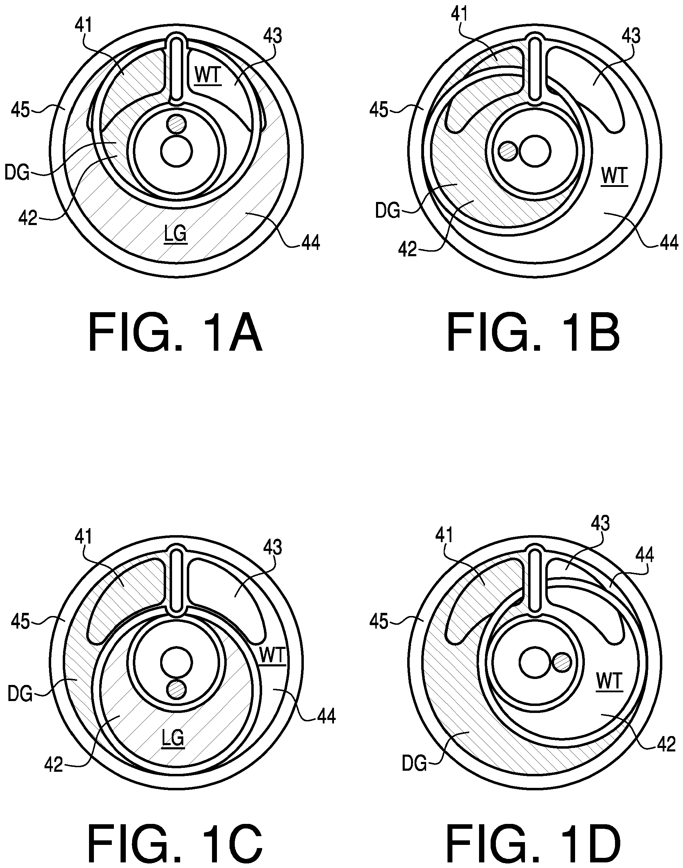

In Figure 1A, water may flow into a left-hand inlet port 41, filling the inner left half of the piston 42 (shown dark grey (DG)) and causing piston 42 to start to rotate anticlockwise within chamber 45. The movement of piston 42 causes the water in the other inner right half of the piston 42 (shown white (WT)) to exhaust out of a right-hand outlet port 43. Neutral water 44, outside of piston 42 is shown as light grey (LG).

In Figure 1B, piston 42 has moved counter clockwise round a quarter of its path and the in-flowing water continues to fill the dark grey area inside and also now outside piston 42. The neutral water is now shown white since it is also being exhausted through outlet port 43.

In Figure 1C, piston 42 has now moved counter clockwise round half of its path. In-flowing water is shown on the inlet port 41 at the left side of chamber 45. Neutral water inside piston 42 is cut off from both ports 41 and 43, and exhaust water continues to be passed through the outlet port 43.

In Figure 1D, with three-quarters of the piston's cycle completed, piston 42 is just starting to open to inlet port 41 for the beginning of another cycle. The neutral water within the remaining part of the piston has now become exhaust water and the dark grey area in the chamber 45 will soon become neutral water as in the first diagram of Figure 1A.

The inlet and outlet ports may be located differently than the configurations described herein. For instance, the ports may have the opposite flow directions of the fluid than those examples of the meters disclosed in this description. The piston and the chamber may have configurations, structures and/or shapes different than the examples disclosed in this description. These design features are not intended to restrict the claims.

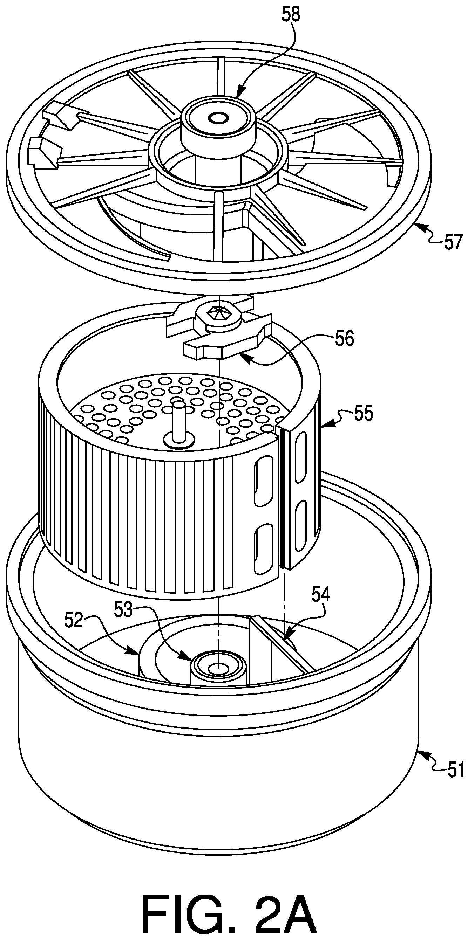

Figure 2A is an exploded view of the present meter. It may have a chamber 51. There may a chamber hub 52 and chamber shaft 53 within chamber 51. A shutter wall 54 may be situated in chamber 5. A piston 55 may be within chamber 53. A drive bar 56 may be driven by a piston peg. A top plate 57 may be situated over an assembly of the meter. Plate 57 may be regarded as a bottom plate depending on the meter type. There may be a register magnet drive 58 situated at the center of plate 57.

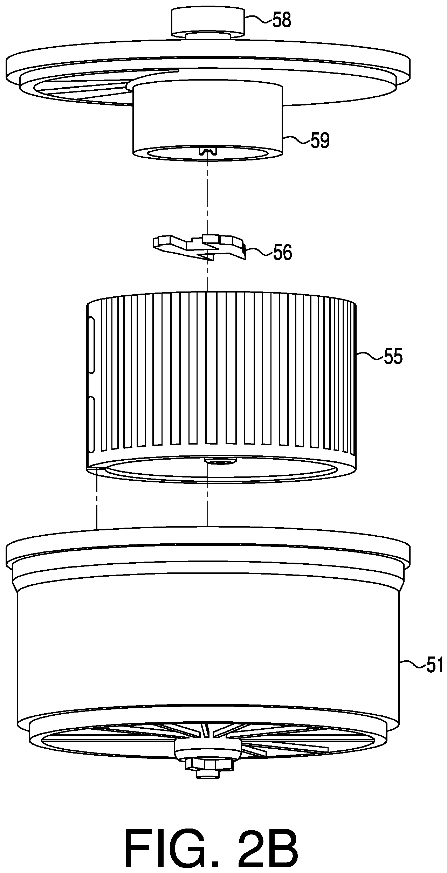

Figure 2B is a diagram of a side view of the exploded view in Figure 2A. There is a top hub 59 that may work in conjunction with chamber hub 52.

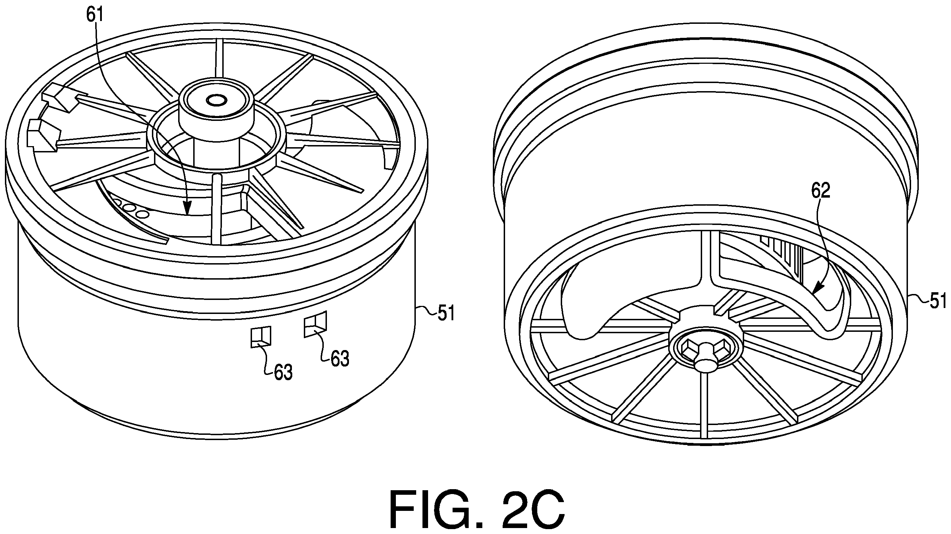

Figure 2C is a diagram of top view of chamber 51 with a port 61 that may be an inlet or an outlet for the chamber. Minor side ports 63 may sometimes aid major ports 61 and 62. Also shown is a bottom view of chamber 51 that shows port 62 which may be an outlet or inlet. Some meter chambers may have water entering through a port on top of the chamber and exiting from a port at the bottom of the chamber. Some meters may have water entering from a port at the bottom of the chamber and exiting a port at the top of the chamber. In some cases, inlets and outlets may be on the same surface. In some cases, minor ports may be added on the side face of the chamber to assist the major inlet and outer ports.

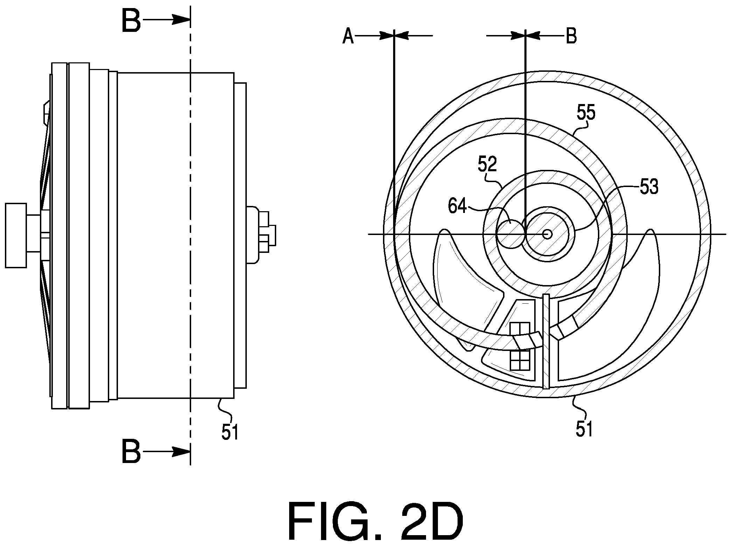

Figure 2D may be a diagram of a section B-B that shows piston radial control faces. Dimension "A" may be controlled by contact between the piston 55 inside diameter and chamber hub 52 outside diameter (at this indicated point) and contact between a piston peg 64 and chamber hub shaft 53 "B".

The present meter and approach may be a complex constraint system. So an orbiting of the piston may be constrained by an inside diameter of the piston against the outside diameter of the chamber hub and the piston peg against the chamber center shaft. Its orbit may be guided by a chamber divider (wall or shutter) whereby the nose gap of the piston may run along the length or part of the length of the divider. Due to tolerances, the present meter may see a zero gap between the piston outside diameter and the chamber inside diameter which may override the inside diameter of the piston against the outside diameter of the chamber hub. A move going forward may be to eliminate this unpredictable constraint by providing a clearance "X".

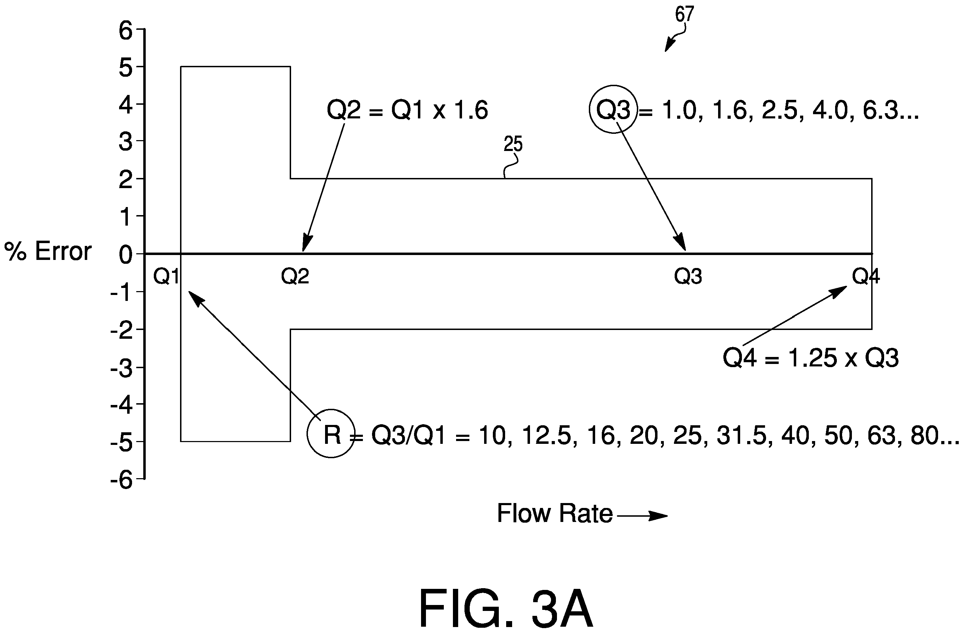

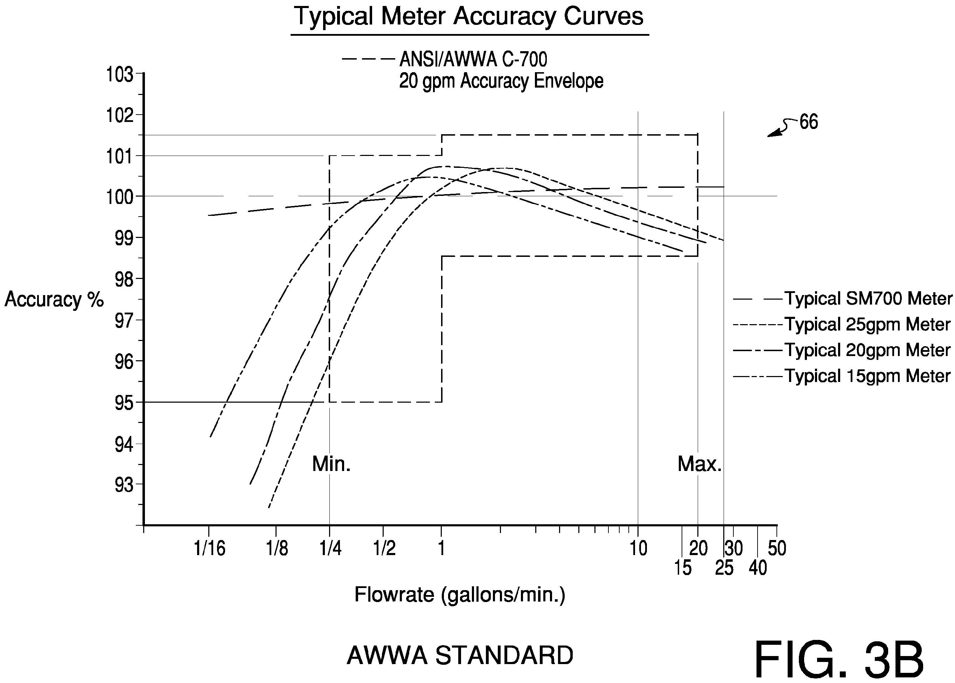

Meter performance may be defined by its accuracy at given flow rates. Figure 3A is a diagram of a graph 67 that illustrates error in percentage versus flow rate. This is the European Measuring Instrument Directive current system. There are other standards used to measure accuracy such as the AWWA (American Standard) as shown by graph 66 of Figure 3B, and the old system that was used before the MID. So, Turn Down ratio and various accuracy measurements taken at various flows may all be used. Figure 3A is what may be used for volumetric domestic meters for European markets. Meter performance may be tested and measured by other ways or methods of various jurisdictions or countries. The illustrations in Figures 3A and 3B are just some examples.

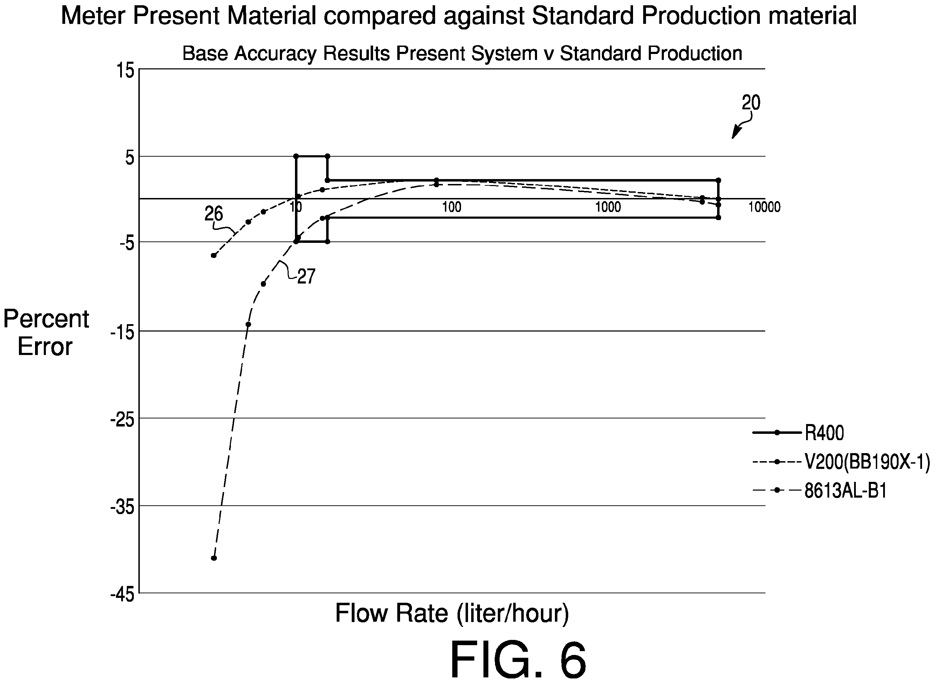

Typically, there appears to be a trade off in accuracy between high and low flows. Some meters may be more accurate at high flows but less accurate at low flows and some meters may be more accurate at low flows but less accurate at high flows. A value called the turndown ratio (R) may be defined by the meter's nominal flow rate divided by its minimum flow rate. Line 25 indicates permitted maximum flow accuracies. At low flows a meter may be permitted to have an accuracy of +/-5% and as the flow increases the accuracy may be limited to +/-- 2%. With use, a meter's accuracy may degrade ultimately to the point requiring replacement of the meter. Figure 3A and Figure 6 may be reviewed in conjunction with each other.

Making piston 11 buoyant while keeping a large reaction force for torque may give greatly increased low flow performance. When a piston is buoyant, much lower flows may start it moving due to vastly reduced friction and drag on the chamber floor. There appear also potential additional benefits such as increased clearances in some areas to improve manufacture yield rates, better thermal limits due to increased clearances, and possible noise reduction due to lower density (smaller contact forces) and greater clearances reducing contact. Creating a buoyant piston may demonstrate that both the low flow accuracy of the DN15 size and the high flow accuracy of the DN20 size can be realized in a modified DN20 buoyant piston giving a superior turndown ratio potential of R1000 or higher compared to circa R400 for existing DN15 and DN20 meters. A low flow accuracy of smaller pistons and a high flow accuracy of larger pistons may be sought with the present system and approach.

The piston is likely to be primarily polystyrene with graphite as a lubricant and glass bubbles to change the density. Other polymers could be used as the primary material. For an illustrative example, piston material may incorporate high impact polystyrene 83.3% with a small amount of PTFE 10% and carbon black 6.7% for color. This material may have a density of approximately 1.2g/cm3.

Some companies may create and sell a range of polymers including customized compositions. They may have experience in creating materials for buoyancy. They may sell, for example, material formulated for the present requirements. This material may be high impact polystyrene with glass bubbles added which may be obtained from, for example, a commercial company. The addition of glass bubbles 29, or other low density items may reduce the material density to 997kg/m, making the material buoyant in water. From this material, one may manufacture pistons 11 with instant success showing vast improvements in performance.

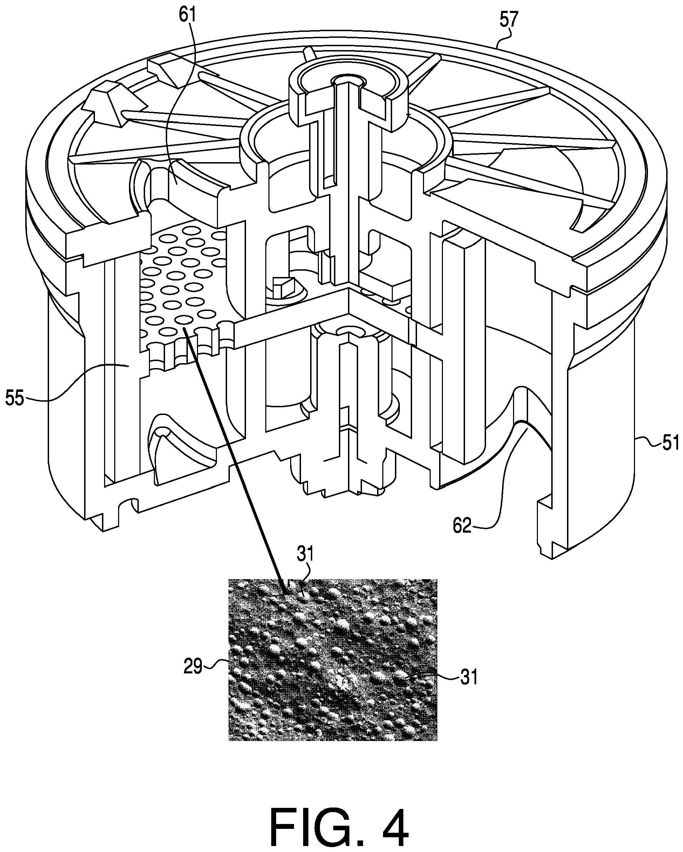

Figure 4 is a diagram of an example meter showing a chamber 51, a top plate 57, a piston 55 having a material 29 buoyant relative to a measured fluid, an inlet port 61 and outlet port 62. Piston 11 may have a material 29 that incorporates glass bubbles 31 which can increase buoyancy of the piston. Inlet ports may be on the top or bottom of the chamber; likewise, the same is true for the outlet ports. Some meters may have "minor" side ports to assist the major ports. One may use "top plate" and "chamber", but it may be really top and bottom of the measuring chamber.

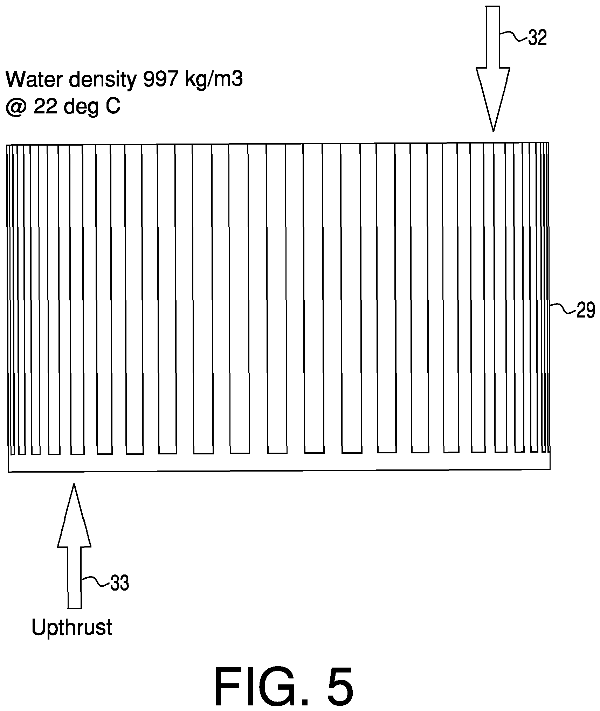

Figure 5 is a diagram of piston material 29 having a density of 997 kg/m3 at 22 degrees C like that of the metered fluid. Gravity has a force 32 upon material 29 which may be countered by an upward thrust force 33 of the buoyant piston 11. Forces 32 and 33 may cancel each other out thereby result in a piston that exerts nearly minimal vertical force in chamber 13.

Figure 6 is a diagram of a graph 20 showing increased performance due to increased buoyancy of a rotary piston of a positive displacement meter. A line 26 is of a product having a piston of non-buoyant material. A line 27 is of the same sized product having a replacement buoyant piston.

With appropriate materials and molding, buoyant material can be made using the above noted material incorporating glass bubbles. The use of a buoyant piston material (density less than 1000 kg/m3) to reduce static and dynamic friction primarily at flows <=15 l/h (liters per hour).

A buoyant piston may allow use of a lower RPL (Rev per Liter) larger piston giving the benefits of less leakage per revolution. An increase in running clearances may improve manufacturability and thermal tolerance.

Water may enter a chamber and cause the piston to orbit around the chamber. Gravity may act on the piston pulling it to the chamber floor. If the density of the piston is greater than water, friction between the piston and chamber floor may be significant and should be reduced. At low flows, friction between the chamber floor and piston has a negative effect on accuracy. If the piston is buoyant, friction particularly at low flows may be reduced.

Introducing additives to the piston material, in this case glass bubbles, may reduce the overall piston density. "Tuning" ratios of piston materials will give different densities and can be mixed to give a density less than water creating a buoyant piston.

In general, the use of a buoyant piston material (density less than 1.0g/cm3 may reduce static and dynamic friction primarily at flows <=15 l/h; a buoyant piston may allow use of a lower RPL (Revs Per Litre) larger piston giving the benefits of less leakage per revolution; and the buoyant piston material may allow an increase in running clearances improving manufacturability and thermal tolerance.

To recap, a fluid meter may incorporate a chamber having an internal diameter, closed at a first end with a first structure and closed at a second end with a second structure which can be part of the chamber, and the chamber having a hub situated on the second structure, that is concentric with the chamber, and an inner piston that orbits in a path constrained by an external diameter of the piston against the internal diameter of the chamber, and the piston having a peg against a center shaft of the chamber, the piston having an orbit guided by a divider wall of the chamber, and the piston having a nose gap that can run along a length or part of the length of the divider, and between the internal diameter of the chamber and the external diameter of the piston is an X gap. X may be equal to or greater than zero. A fluid may enter the chamber through an input port in the first or second structure or side faces of the chamber, and exit the chamber through an output port in the first or second structure or side faces of the chamber, and for one rotation of the piston in the chamber caused by a flow of fluid into the inlet port, with a flow of the fluid out of the outlet port, there is a fixed-volume discrete parcel of fluid for each rotation of the piston.

The piston may be subject to a force of gravity. The piston may be subject to a force of thrust from the fluid entering the chamber. The force of gravity and the force of thrust may be equal or unequal relative to each other just sufficient to ensure buoyance.

The piston may have a buoyance relative to the fluid.

The fluid may be water.

The piston incorporates a material to which additives are added to change a density of the material and consequently that of the piston.

The piston's buoyance is adjusted by adding glass bubbles or subtracting glass bubbles to or from, respectively, a base material of the piston.

An approach for measuring a flow of fluid may incorporate forcing a fluid into a round chamber having an inside diameter, the round chamber having a round piston with an external diameter smaller than the inside diameter of the chamber, the round piston thereby being forced by the fluid, to roll inside of the chamber, the piston having an external curved surface at a first distance from the inside curved surface of the chamber, and the piston having an axis of rotation that follows a circular path concentric to a central axis of the chamber. The axes of the chamber and the piston may be vertical and parallel to each other. The piston may be buoyant relative to the fluid to prevent a gravity force pushing the piston down toward the bottom of the chamber that increases friction between the piston and the bottom of the chamber, and results in erroneous measurements of the fluid flow based on rotations of the piston in the chamber, which create discrete parcels of the passing fluid to be counted for a measurement of fluid flow.

The density of the piston may be between plus and minus two percent different than a density of the passing fluid to ensure a predetermined buoyance.

The first distance between the external curved surface of the piston and the inside curved surface of the chamber may be equal to or greater than zero mm and have a variation of up to plus and minus ten percent of a selected first distance.

The piston may incorporate a mixture of materials that includes a thermoplastic and one or more additives that can alter a density of the mixture, strength or lubricity of the materials.

An additive is used to attain a predetermined buoyancy of the piston relative to the fluid.

Glass bubbles are an additive to decrease the density of the mixture of materials or graphite can be an additive as a lubricant.

The fluid may be water.

A fluid flow measuring system may incorporate a piston fluid meter having a rotary piston situated in a chamber that creates fixed volume discrete parcels of passing fluid. The rotary piston may have a buoyancy in the passing fluid.

The density of the rotary piston may be between plus or minus two percent different than the density of the passing fluid.

The rotary piston may have a density that is less than the density of the passing fluid.

The material of the piston may be mostly a thermoplastic with the remaining material of the piston that comprises specified amount of additives to obtain a predetermined density, strength or lubricity.

The additives may contain graphite as a lubricant.

An additive incorporates glass bubbles to decrease the density of the rotary system piston.

A clearance between the rotary piston and the chamber may be between 0.0 mm and 5.0 mm.

## Claims

1. A fluid meter comprising:
a chamber (45) having an internal diameter, closed at a first end with a first structure and closed at a second end with a second structure which can be part of the chamber, and the chamber having a hub (52) situated on the second structure, that is concentric with the chamber; and
a piston (55) that orbits in a path constrained by an external diameter of the piston against the internal diameter of the chamber, the piston having a peg (64) against a center shaft (53) of the chamber, the piston having an orbit guided by a divider wall (54) of the chamber, and the piston having a nose gap that can run along a length or part of the length of the divider wall, and between the internal diameter of the chamber and the external diameter of the piston is an X gap; and
wherein:
the piston has a density of less than 1.0 g/cm3;
X is equal to or greater than zero;
a fluid can enter the chamber through an input port in the first or second structure or side faces of the chamber, and exit the chamber through an output port in the first or second structure or the side faces of the chamber;
for one rotation of the piston in the chamber caused by a flow of the fluid into the inlet port (61), with a flow of the fluid out of the outlet port (62), there is a fixed-volume discrete parcel of the fluid for each rotation of the piston,
**characterized in that**
the piston comprises a material to which additives are added to change a density of the material and consequently of the piston, and
the piston has a buoyance that is adjusted by adding glass bubbles or subtracting the glass bubbles to or from, respectively, a base material of the piston.

2. The fluid meter of claim 1, wherein:
the piston is subject to a force of gravity; and
the piston is subject to a force of thrust from the fluid entering the chamber; and
wherein the force of gravity and the force of thrust are equal or unequal relative to each other just sufficient to ensure buoyance of the piston.

3. The fluid meter of claim 1, wherein:
the piston has a buoyance relative to the fluid; or
the fluid is water.

4. A method for measuring a flow of fluid, the method comprising:
forcing a fluid into a round chamber (45) having an inside diameter, the round chamber having a round piston (55)
with an external diameter smaller than the inside diameter of the chamber,
the round piston thereby being forced by the fluid, to roll inside of the chamber, the round piston having an external curved surface at a first distance from the inside curved surface of the chamber, and the round piston having an axis of rotation that follows a circular path concentric to a central axis of the chamber; and
wherein:
the axes of the chamber and the piston are vertical and parallel to each other;
the round piston is buoyant relative to the fluid to prevent a gravity force pushing the round piston down toward the bottom of the chamber that increases friction between the round piston and the bottom of the chamber, and result in erroneous measurements of the fluid flow based on rotations of the round piston in the chamber, which create discrete parcels of the passing fluid to be counted for a measurement of fluid flow;
the round piston has a density of less than 1.0 g/cm3,
**characterized in that**
the piston comprises a material to which additives are added to change a density of the material and consequently of the piston, and
the piston has a buoyance that is adjusted by adding glass bubbles or subtracting the glass bubbles to or from, respectively, a base material of the piston.

5. The method of claim 4, wherein:
the density of the round piston is between plus and minus two percent different than a density of the passing fluid to ensure a predetermined buoyance; or
the first distance between the external curved surface of the round piston and the inside curved surface of the chamber is equal to or greater than zero mm and having a variation of plus and minus ten percent of a selected first distance.

6. The method of claim 4, wherein the round piston comprises a mixture of materials that include a thermoplastic and the additives that can alter a density of the mixture, strength or lubricity of the materials.

7. The method of claim 6, wherein an additive is used to attain a predetermined buoyancy of the round piston relative to the fluid.

8. The method of claim 6, wherein the glass bubbles can be the additive to decrease the density of the mixture of materials or graphite can be an additive as a lubricant.

9. The method claim 7, wherein the fluid is water.

10. A fluid flow measuring system comprising a piston fluid meter having a rotary piston situated in a chamber according to claim 1, wherein the rotary piston has buoyancy in the passing fluid.

11. The system of claim 10, wherein:
the density of the rotary piston is between plus or minus two percent different than the density of the passing fluid; or
the rotary piston has a density that is less than the density of the passing fluid.

12. The system of claim 10, wherein the material of the rotary piston is mostly a thermoplastic with a remaining material of the rotary piston that comprises a specified amount of the additives to obtain a predetermined density, strength or lubricity.

13. The system of claim 12, wherein:
the additives contain graphite as a lubricant; or
an additive comprises glass bubbles to decrease the density of the rotary piston.

14. The system of claim 10, wherein a clearance between the rotary piston and the chamber is between 0.0 mm and 5.0 mm.

## Patentansprüche

1. Fluidmessgerät, umfassend:
eine Kammer (45), die einen Innendurchmesser aufweist und die an einem ersten Ende mit einer ersten Struktur verschlossen ist und an einem zweiten Ende mit einer zweiten Struktur verschlossen ist, die Teil der Kammer sein kann, wobei die Kammer eine Nabe (52) aufweist, die auf der zweiten Struktur angeordnet ist, die konzentrisch mit der Kammer ist; und
einen Kolben (55), der auf einer Bahn umläuft, die durch einen Außendurchmesser des Kolbens gegen den Innendurchmesser der Kammer begrenzt ist, wobei der Kolben einen Zapfen (64) gegen eine Mittelwelle (53) der Kammer aufweist, wobei der Kolben eine Umlaufbahn aufweist, die durch eine Trennwand (54) der Kammer geführt wird, und wobei der Kolben einen Nasenspalt aufweist, der entlang einer Länge oder einem Teil der Länge der Trennwand verlaufen kann, und zwischen dem Innendurchmesser der Kammer und dem Außendurchmesser des Kolbens ein X-Spalt ist; und
wobei:
der Kolben eine Dichte von weniger als 1,0 g/cm3 aufweist;
X gleich oder größer als null ist;
ein Fluid in die Kammer durch eine Eingangsöffnung in der ersten oder zweiten Struktur oder den Seitenflächen der Kammer eintreten und die Kammer durch eine Ausgangsöffnung in der ersten oder zweiten Struktur oder den Seitenflächen der Kammer verlassen kann;
für eine Umdrehung des Kolbens in der Kammer, die durch eine Strömung des Fluids in die Einlassöffnung (61) verursacht wird, mit einer Strömung des Fluids aus der Auslassöffnung (62) ein diskretes Paket des Fluids mit festem Volumen für jede Umdrehung des Kolbens vorhanden ist,
**dadurch gekennzeichnet, dass**
der Kolben ein Material umfasst, dem Zusatzstoffe zugegeben werden, um eine Dichte des Materials und folglich des Kolbens zu verändern, und
der Kolben einen Auftrieb aufweist, der jeweils durch Zugeben von Glasblasen zu einem Basismaterial des Kolbens oder durch Abziehen von Glasblasen davon eingestellt wird.

2. Fluidmessgerät nach Anspruch 1, wobei:
der Kolben einer Schwerkraft ausgesetzt ist; und
der Kolben einer Schubkraft durch das in die Kammer eintretende Fluid ausgesetzt ist; und
wobei die Schwerkraft und die Schubkraft gleich oder ungleich relativ zueinander sind, gerade ausreichend, dass der Auftrieb des Kolbens sichergestellt ist.

3. Fluidmessgerät nach Anspruch 1, wobei:
der Kolben einen Auftrieb relativ zum Fluid aufweist; oder
das Fluid Wasser ist.

4. Verfahren zum Messen einer Fluidströmung, wobei das Verfahren umfasst:
Zwingen eines Fluids in eine runde Kammer (45), die einen Innendurchmesser aufweist, wobei die runde Kammer einen runden Kolben (55) mit einem Außendurchmesser aufweist, der kleiner als der Innendurchmesser der Kammer ist, wobei der runde Kolben dadurch durch das Fluid gezwungen wird, im Inneren der Kammer zu rollen, wobei der runde Kolben eine gekrümmte Außenfläche in einem ersten Abstand von der gekrümmten Innenfläche der Kammer aufweist und der runde Kolben eine Drehachse aufweist, die einer kreisförmigen Bahn folgt, die konzentrisch zu einer Mittelachse der Kammer ist; und
wobei:
die Achsen der Kammer und des Kolbens vertikal und parallel zueinander sind; und
der runde Kolben relativ zum Fluid schwimmfähig ist, um zu verhindern, dass eine Schwerkraft den runden Kolben nach unten zum Boden der Kammer drückt, die die Reibung zwischen dem runden Kolben und dem Boden der Kammer erhöht und zu fehlerhaften Messungen der Fluidströmung basierend auf Drehungen des runden Kolbens in der Kammer führt, die diskrete Pakete des passierenden Fluids erzeugen, die für eine Messung der Fluidströmung zu zählen sind;
der runde Kolben eine Dichte von weniger als 1,0 g/cm3 aufweist,
**dadurch gekennzeichnet, dass**
der Kolben ein Material umfasst, dem Zusatzstoffe zugegeben werden, um eine Dichte des Materials und folglich des Kolbens zu verändern, und
der Kolben einen Auftrieb aufweist, der jeweils durch Zugeben von Glasblasen zu einem Basismaterial des Kolbens oder durch Abziehen von Glasblasen davon eingestellt wird.

5. Verfahren nach Anspruch 4, wobei:
die Dichte des runden Kolbens zwischen plus und minus zwei Prozent anders ist als eine Dichte des passierenden Fluids, um einen vorbestimmten Auftrieb sicherzustellen; oder
der erste Abstand zwischen der äußeren gekrümmten Fläche des runden Kolbens und der inneren gekrümmten Fläche der Kammer gleich oder größer als null mm ist, und eine Abweichung von plus/minus zehn Prozent eines ausgewählten ersten Abstands aufweist.

6. Verfahren nach Anspruch 4, wobei der runde Kolben eine Mischung von Materialien umfasst, die einen thermoplastischen Kunststoff und die Zusatzstoffe einschließen, die die Dichte der Mischung, die Festigkeit oder die Schmierfähigkeit der Materialien verändern können.

7. Verfahren nach Anspruch 6, wobei ein Zusatzstoff verwendet wird, um einen vorbestimmten Auftrieb des runden Kolbens relativ zum Fluid zu erreichen.

8. Verfahren nach Anspruch 6, wobei die Glasblasen der Zusatzstoff sein können, um die Dichte der Materialmischung zu verringern, oder Grafit ein Zusatzstoff als Schmiermittel sein kann.

9. Verfahren nach Anspruch 7, wobei das Fluid Wasser ist.

10. Fluidströmungs-Messsystem, das ein Kolbenfluidmessgerät umfasst, das einen Drehkolben aufweist, der sich in einer Kammer nach Anspruch 1 befindet, wobei der Drehkolben im passierenden Fluid Auftrieb aufweist.

11. System nach Anspruch 10, wobei:
die Dichte des Drehkolbens um plus oder minus zwei Prozent von der Dichte des passierenden Fluids abweicht; oder
der Drehkolben eine Dichte aufweist, die niedriger als die Dichte des passierenden Fluids ist.

12. System nach Anspruch 10, wobei das Material des Drehkolbens größtenteils ein Thermoplast mit einem restlichen Material des Drehkolbens ist, das eine bestimmte Menge an Zusatzstoffen umfasst, um eine vorbestimmte Dichte, Festigkeit oder Schmierfähigkeit zu erreichen.

13. System nach Anspruch 12, wobei:
die Zusatzstoffe Grafit als Schmiermittel enthalten; oder
ein Zusatzstoff Glasblasen umfasst, um die Dichte des Drehkolbens zu verringern.

14. System nach Anspruch 10, wobei ein Abstand zwischen dem Drehkolben und der Kammer zwischen 0,0 mm und 5,0 mm beträgt.

## Revendications

1. Fluidimètre comprenant :
une chambre (45) présentant un diamètre interne, fermée à une première extrémité avec une première structure et fermée à une seconde extrémité avec une seconde structure qui peut faire partie de la chambre, et la chambre présentant un moyeu (52) situé sur la seconde structure, qui est concentrique avec la chambre ; et
un piston (55) qui gravite sur une trajectoire limitée par un diamètre externe du piston contre le diamètre interne de la chambre, le piston présentant une cheville (64) contre un arbre central (53) de la chambre, le piston présentant une orbite guidée par une paroi de séparation (54) de la chambre, et le piston présentant un espacement avant qui peut s'étendre le long d'une longueur ou sur une partie de la longueur de la paroi de séparation, et entre le diamètre interne de la chambre et le diamètre externe du piston est présent un espacement X ; et
dans lequel :
le piston présente une densité inférieure à 1,0 g/cm3 ;
X est supérieur ou égal à zéro ;
un fluide peut pénétrer dans la chambre à travers un orifice d'entrée dans la première ou la seconde structure ou les faces latérales de la chambre, et sortir de la chambre à travers un orifice de sortie dans la première ou la seconde structure ou les faces latérales de la chambre ;
pour une rotation du piston dans la chambre provoquée par un écoulement du fluide dans l'orifice d'entrée (61), avec un écoulement du fluide hors de l'orifice de sortie (62), il existe une parcelle discrète de volume fixe du fluide pour chaque rotation du piston,
**caractérisé en ce que**
le piston comprend un matériau auquel des additifs sont ajoutés pour modifier une densité du matériau et par conséquent du piston, et
le piston a une flottabilité qui est ajustée en ajoutant des bulles de verre à un matériau de base du piston ou en soustrayant les bulles de verre de celui-ci, respectivement.

2. Fluidimètre selon la revendication 1, dans lequel :
le piston est soumis à une force de gravité ; et
le piston est soumis à une force de poussée provenant du fluide pénétrant dans la chambre ; et
dans lequel la force de gravité et la force de poussée sont égales ou inégales l'une par rapport à l'autre d'une manière juste suffisante pour garantir la flottabilité du piston.

3. Fluidimètre selon la revendication 1, dans lequel :
le piston présente une flottabilité par rapport au fluide ; ou
le fluide est de l'eau.

4. Procédé de mesure d'un écoulement de fluide, le procédé comprenant :
le forçage d'un fluide dans une chambre ronde (45) présentant un diamètre intérieur, la chambre ronde présentant un piston rond (55) avec un diamètre externe inférieur au diamètre intérieur de la chambre, le piston rond étant ainsi forcé par le fluide, à rouler à l'intérieur de la chambre, le piston rond présentant une surface incurvée externe à une première distance de la surface incurvée intérieure de la chambre, et le piston rond présentant un axe de rotation qui suit une trajectoire circulaire concentrique à un axe central de la chambre ; et
dans lequel :
les axes de la chambre et du piston sont verticaux et parallèles l'un à l'autre ;
le piston rond est flottant par rapport au fluide pour empêcher une force de gravité de pousser le piston rond vers le bas vers le fond de la chambre qui augmente le frottement entre le piston rond et le fond de la chambre, et qui entraîne des mesures erronées de l'écoulement de fluide sur la base des rotations du piston rond dans la chambre, qui génèrent des parcelles discrètes du fluide passant à compter pour une mesure d'écoulement de fluide ;
le piston rond présente une densité inférieure à 1,0 g/cm3,
**caractérisé en ce que**
le piston comprend un matériau auquel des additifs sont ajoutés pour modifier une densité du matériau et par conséquent du piston, et
le piston a une flottabilité qui est ajustée en ajoutant des bulles de verre à un matériau de base du piston ou en soustrayant les bulles de verre de celui-ci, respectivement.

5. Procédé selon la revendication 4, dans lequel :
la densité du piston rond est entre plus et moins deux pour cent différente d'une densité du fluide passant pour garantir une flottabilité prédéterminée ; ou
la première distance entre la surface incurvée externe du piston rond et la surface incurvée intérieure de la chambre est supérieure ou égale à zéro mm et présentant une variation de plus et moins dix pour cent d'une première distance sélectionnée.

6. Procédé selon la revendication 4, dans lequel le piston rond comprend un mélange de matériaux qui incluent un thermoplastique et les additifs qui peuvent altérer une densité du mélange, une résistance ou une lubricité des matériaux.

7. Procédé selon la revendication 6, dans lequel un additif est utilisé pour atteindre une flottabilité prédéterminée du piston rond par rapport au fluide.

8. Procédé selon la revendication 6, dans lequel les bulles de verre peuvent être l'additif permettant de diminuer la densité du mélange de matériaux ou le graphite peut être un additif en tant que lubrifiant.

9. Procédé selon la revendication 7, dans lequel le fluide est de l'eau.

10. Système de mesure d'écoulement de fluide comprenant un fluidimètre à piston présentant un piston rotatif situé dans une chambre selon la revendication 1, dans lequel le piston rotatif présente une flottabilité dans le fluide passant.

11. Système selon la revendication 10, dans lequel :
la densité du piston rotatif est entre plus ou moins deux pour cent différente de la densité du fluide passant ; ou
le piston rotatif présente une densité qui est inférieure à la densité du fluide passant.

12. Système selon la revendication 10, dans lequel le matériau du piston rotatif est principalement un thermoplastique, un matériau restant du piston rotatif comprenant une quantité spécifiée des additifs pour obtenir une densité, une résistance ou une lubricité prédéterminées.

13. Système selon la revendication 12, dans lequel :
les additifs contiennent du graphite en tant que lubrifiant ; ou
un additif comprend des bulles de verre pour diminuer la densité du piston rotatif.

14. Système selon la revendication 10, dans lequel un jeu entre le piston rotatif et la chambre est compris entre 0,0 mm et 5,0 mm.
